## Europäisches Patentamt
## European Patent Office
## Office européen des brevets

(11) Veröffentlichungsnummer: **0 529 271 B1**

# EUROPÄISCHE PATENTSCHRIFT

(45) Veröffentlichungstag der Patentschrift: **08.03.95**

(51) Int. Cl.6: **E01B 5/02**

(21) Anmeldenummer: **92111942.6**

(22) Anmeldetag: **14.07.92**

(54) **Kontaktflächen eines Gleisbauteils wie Schiene oder Weichenbauteil und eines auf diesem fahrenden Rades eines Schienenfahrzeuges.**

(30) Priorität: **26.07.91 DE 4124913**

(43) Veröffentlichungstag der Anmeldung:
**03.03.93 Patentblatt 93/09**

(45) Bekanntmachung des Hinweises auf die
Patenterteilung:
**08.03.95 Patentblatt 95/10**

(84) Benannte Vertragsstaaten:
**AT BE CH DE DK ES FR GB GR IT LI LU MC
NL PT SE**

(56) Entgegenhaltungen:
**DD-A- 206 764
DE-C- 4 008 299
US-A- 2 056 729**

(73) Patentinhaber: **BWG Butzbacher Weichenbau
GmbH
Wetzlarer Strasse 101
D-35510 Butzbach (DE)**

(72) Erfinder: **Ziethen, Rüdiger, Prof.
Geranienweg 6
W-6382 Friedrichsdorf (DE)**
Erfinder: **Benenowski, Sebastian
Schumannstrasse 5
W-6308 Butzbach (DE)**
Erfinder: **Nuding, Erich
Hohekreuzstrasse 63
W-7080 Aalen-Dewangen (DE)**

(74) Vertreter: **Stoffregen, Hans-Herbert, Dr.
Dipl.-Phys.
Patentanwälte Strasse & Stoffregen
Salzstrasse 11a
Postfach 2144
D-63411 Hanau (DE)**

## Beschreibung

Die Erfindung bezieht sich auf Kontaktflächen eines Gleisbauteils wie Schiene oder Weichenbauteil und eines auf diesem fahrenden Rades eines Schienenfahrzeuges, wobei die Kontaktflächen des Rades Krümmungen aufweisen, die stetig ineinander übergehen.

Der Verschleiß eines Rades wie der einer Schiene, also dessen Schienenkopfes ist einerseits von den verwendeten Werkstoffen und andererseits in hohem Maße von der Formgebung von Rad und Schiene beeinflußt.

Die heutzutage verwendeten Schienen - seien es solche im normalen Gleis oder solche z. B. im Bereich von Weichen und Kreuzungen - weisen Schienenköpfe auf, die in den Bereichen, in denen sie mit dem auf diesen fahrenden Rädern eines Schienenfahrzeuges in Berührung kommen, also in den Berührungs- oder Kontaktflächen, drei Abschnitte umfassen, die sprunghaft sich ändernde Radien besitzen. So weist beispielsweise bei der Schiene UIC 60 der flankenseitige Abschnitt einen Radius von 13 mm, der sich anschließende Abschnitt einen Radius von 80 mm und der in den horizontalen Bereich übergehende Abschnitt einen Radius von 300 mm auf. Diesen erwähntermaßen sprunghaften Änderungen der Krümmung ist ein Rad zugeordnet, bei dem eine stetige Änderung der Krümmung vorgegeben ist, wobei im Bereich des Spurkranzes, der mit dem Flankenbereich der Schiene wechselwirkt, ein Krümmungsradius von ebenfalls 13 mm vorliegt. Besteht in diesem Bereich eine Übereinstimmung hinsichtlich der Krümmung und damit der Krümmungsradien, so sind in allen anderen Bereichen Abweichungen gegeben, die sich sogar sprunghaft ändern.

Aufgrund dieser Geometrien ist in Abhängigkeit des Radverlaufs quer zur Gleisachse, wodurch die Berührung zwischen Rad und Schienenkopf bestimmt wird, grundsätzlich von einer Einpunkt-, Zweipunkt- und Linienberührung zwischen Rad und Schiene auszugehen.

Die Einpunktberührung liegt immer dann vor, wenn die Krümmung des Rades kleiner als die der Schiene beim jeweiligen Aufstandswinkel ( = Winkel zwischen Normalkraft und Vertikalen = Winkel zwischen Berührungstangente Rad/Schiene und Horizontalen) ist. Bei dieser Berührung ist ein relativ kleiner Längsschlupf aus dem Durchmesserunterschied der augenblicklichen Rollkreise der Räder eines Radsatzes und der Bremskraft- oder Zugkraftübertragung gegeben. Da jedoch in einem Punkt gemeinsam Last- und Führungskräfte angreifen, können Quetschgrenzenüberschreitungen auftreten, die zu Schäden und Ausbröckelungen sowohl am Rad als auch an der Schiene führen können.

Die Zweipunktberührung wird durch die Trennung des Radaufstandspunktes und des Spurkranzdruckpunktes bestimmt. Im Radaufstandspunkt wirkt der größte Teil der Radlast, im Spurkranzdruckpunkt wirken die Richtkraft und Anteile der Radlast. Da ein reines Rollen des Rades nur in einem Durchmesser möglich ist, durch die Zweipunktberührung jedoch unterschiedliche Durchmesser vorliegen müssen, tritt zumindest in einem Punkt ein Gleitverschleiß auf, wohingegen im anderen Berührungspunkt ein Abrollen erfolgt. Die linienförmige Berührung zwischen Rad und Schiene entsteht sowohl aus der Einpunkt- wie aus der Zweipunktberührung entweder durch Quetschgrenzüberschreitung oder durch andauernden Gleitverschleiß.

Betrachtet man die jeweilige Kontaktfläche zwischen Rad und Schiene, so ergeben sich bei einem Geradlauf und einem Bogenlauf unterschiedliche Kontaktflächen, die die Form von Ellipsen haben und daher auch als Aufstandsellipsen bezeichnet werden. Dabei ist die maximale Hauptachse der Aufstandsellipsen werkstoffabhängig stets gleich groß, weil sich auf der in Längsrichtung betrachtet geraden Linie der Schiene ein einem Kreis folgender Abschnitt des Rades mit nahezu gleichem Durchmesser abstützt. Die kurze Halbachse, also die Querachse ändert sich jedoch in Abhängigkeit von der Radstellung zum Schienenkopf. Je kleiner jedoch die kurze Halbachse ist, um so höher ist die Beanspruchung. Hierdurch bedingt erfolgt ein unerwünschter Verschleiß, der insbesondere bei der Schiene zu einer bleibenden Geometrieveränderung führt, die eine Erneuerung erforderlich macht.

Der vorliegenden Erfindung liegt das Problem zugrunde, eine formstabilere Geometrie, also höhere Formtreue der Schiene zu erzielen.

Das Problem wird erfindungsgemäß im wesentlichen dadurch gelöst, daß die jeweilige Kontaktfläche der Schiene eine Krümmung besitzt, die zu der Krümmung der entsprechenden momentanen Kontaktfläche des sich abstützenden Rades eine konstante Differenz aufweist, oder aufeinanderfolgende Kontaktflächen von der Schiene und dem Rad eine stetig sich ändernde Krümmungsdifferenz aufweisen, jeweils betrachtet in einer Ebene senkrecht zur Schienenlängsachse. Dabei ist die Krümmung der Kontaktfläche des Rades stets kleiner als die der entsprechenden Kontaktfläche der Schiene. Eine weitere Lösung für das genannte Problem ist im unabhängigen Anspruch 6 angegeben. Die Erfindung geht von der Erkenntnis aus, daß die Kontaktflächen zwischen Rad und Schiene einerseits durch den Fahrzeuglauf und der Achslast und andererseits von der geometrischen Gestaltung des Rades gegeben ist, so daß als einziger Freiheitsgrad die Möglichkeit gegeben ist, Form und Festigkeit der Schiene bzw. des jeweiligen Schienenabschnittes zu ändern. Dabei löste man sich von der Vorstellung, daß das Schienenprofil die bekannten sich sprunghaft ändernden Krümmungen im Schienenkopfbereich aufweisen muß. Vielmehr erfolgt eine Anpassung der Geometrie des Schienenkopfes an den Krümmungsverlauf des Rades, bei dem eine stetige Änderung des Radius gegeben ist. Um gleichzeitig eine flächige Berührung, also die Aufstandsellipse sicherzustellen, ist des weiteren als Nebenbedingung vorgegeben worden, daß der Krümmungsradius der Kontaktfläche des Rades stets größer als der der entsprechenden Kontaktfläche der Schiene ist.

In Ausgestaltung der Erfindung ist vorgesehen, daß sich die Krümmungsdifferenz in Abhängigkeit von dem Aufstandswinkel ( = Winkel zwischen Normalkraft und Vertikalen = Winkel zwischen Berührungstangente Rad/Schiene und Horizontalen) des Rades ändert. Dies bedeutet, daß die Krümmungsdifferenz zwischen Rad und Schiene nicht konstant ist, sondern sich stetig ändert.

Um eine im wesentlichen konstante Flächenpressung bzw. Vergleichsspannung zwischen Rad und Schiene zu erreichen, ist vorgesehen, daß die Krümmungsdifferenz eine Funktion des Aufstandswinkels ist. Dabei wird bei größer werdendem Aufstandswinkel die Krümmungsdifferenz kleiner. Diese Krümmungsdifferenzänderung wirkt sich in der Aufstandsellipse derart aus, daß die kleine Halbachse wächst. Durch die flächenmäßig größer werdende Aufstandsellipse wird trotz größer werdender Normallast die Flächenpressung nicht größer, d. h. sie bleibt konstant oder im wesentlichen konstant.

Da ein Verschleiß durch Gleiten und durch Pressung erfolgt, kann dahingehend eine Optimierung erfolgen, daß vorgesehen wird, die Krümmungsdifferenz in Abhängigkeit des Aufstandswinkels noch kleiner werden zu lassen, d. h. mit größer werdendem Aufstandswinkel wird die kurze Halbachse der Aufstandsellipse noch größer, d. h. die Flächenpressung nimmt bei gleichzeitiger Zunahme der Gleitung ab, so daß im Ergebnis der Verschleiß unabhängig vom Aufstandswinkel gleich oder nahezu gleich ist.

Sofern die Krümmungsdifferenzen oder -unterschiede gleich sein sollen, werden die Schienenbauteile so geformt, daß an jedem Rad-Schienen-Berührungspunkt einerseits die Tangente beide,. Bauteile parallel verlaufen und andererseits die kurzen Halbachsen der Aufstandsellipsen stets die gleiche Breite zeigen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:

Fig. 1 ein Diagramm, in dem die Krümmung gegenüber dem Radaufstandswinkel aufgetragen ist,

Fig. 2 Abschnitte von Schienenbauteilen, die zu auf diesen fahrenden Rädern in ihren Kontaktflächen konstante Krümmungsunterschiede bei unterschiedlichen Radstellungen aufweisen,

Fig. 3 Abschnitte von Schienenbauteilen unterschiedlicher Breiten und unterschiedlicher Krümmungsdifferenzen zu auf diesen fahrenden Rädern,

Fig. 4 unterschiedliche Schienenköpfe und

Fig. 5 ein weiteres Diagramm, in dem die Krümmungsdifferenz gegenüber dem Winkel der Berührungstangente aufgetragen ist.

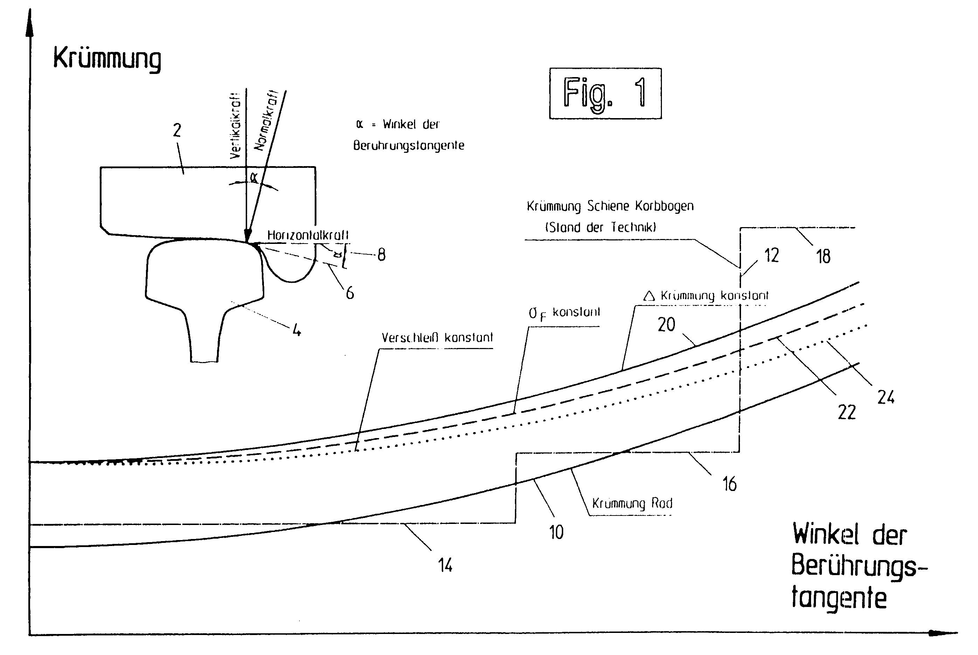

Der Unterschied zwischen der erfindungsgemäßen Lehre und dem bekannten Stand der Technik soll an Hand der Fig. 1 verdeutlicht werden.

In der Graphik ist die Krümmung gegenüber dem Winkel der Berührungstangente, also der Radaufstandswinkel zwischen Rad und Gleisbauteil (nachstehend vereinfacht ausgedrückt als Schiene), also Schienenkopf dargestellt.

Wie der in der Graphik wiedergegebene Ausschnitt von Rad (2) und Schienenkopf (4) zeigt, ist der Radaufstandswinkel α gleich der Winkel zwischen der Berührungstangente (6) zwischen dem Rad (2) und Schienenkopf (4) und der Horizontalen (8) bzw. zwischen der Horizontalkraft und der Berührungstangente (6). Folglich ist der Winkel α auch der Winkel zwischen der Vertikalkraft und der Normalkraft.

Auch ist ersichtlich, daß je größer der Winkel α ist, desto größer die resultierende Kraft im Flankenbereich des Schienenkopfes ist.

Die untere durchgezogene Linie (10) zeigt den Krümmungsverlauf der Fahrfläche des Rades (2), bei dem eine stetige Änderung der Krümmung mit zunehmendem Radaufstandswinkel α festzustellen ist.

Nach dem Stand der Technik fährt ein entsprechendes, eine stetig sich ändernde Krümmung aufweisendes Rad (2) auf einer Schiene, dessen Krümmung sich sprunghaft ändert. Dies wird durch die Punkt-Strich-Linie (12) verdeutlicht. Man erkennt, daß die Krümmungsdifferenz in Abhängigkeit von dem Radaufstandswinkel α zwischen Rad und Schiene sich bereichsweise unstetig ändert, wobei abschnittsweise die Krümmung und damit der Krümmungsradius des Rades größer als die der Schiene ist und umgekehrt. Das über dem Koordinatenursprung verlaufende Plateau (14) entspricht dem Krümmungsradius von 300 mm, das folgende Plateau (16) dem Krümmungsradius von 80 mm und das dritte Plateau (18) dem Krümmungsradius von 13 mm des Schienenkopfes.

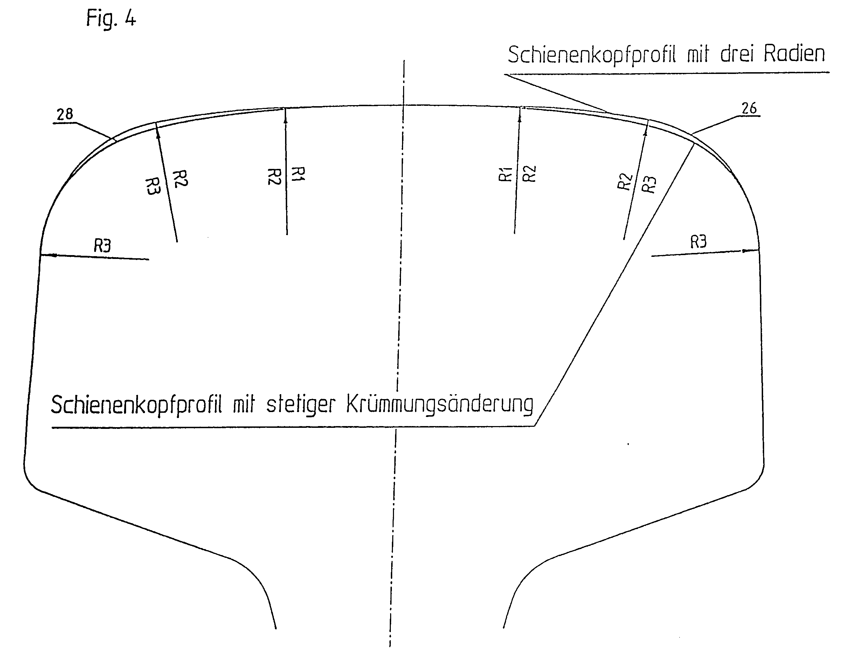

Ein entsprechender sprunghaft sich ändernde Krümmungen aufweisender Schienenkopf ist in Fig. 4 rein prinzipiell dargestellt und mit dem Bezugszeichen (26) versehen. Die unterschiedlichen Krümmungen und damit Radien sind mit R1, R2 und R3 bezeichnet.

Erfindungsgemäß wird nun vorgeschlagen, daß sich die Krümmung des Bereichs des Schienenkopfes, der mit dem Rad wechselwirkt, stetig ändert, und zwar in der Darstellung der Fig. 1 derart, daß gemäß der durchgezogenen oberen Linie (20) sich eine konstante Krümmungsdifferenz zwischen Rad und Schiene in der jeweiligen Kontaktfläche entlang des Schienenkopfes betrachtet in einer Ebene senkrecht zur Schienenlängsachse ergibt.

Die durchgezogene oberen Linie (20) soll die jeweilige Krümmmung der Schiene rein qualitativ angeben. Zwischen den Linien (10) und (20) soll bei unterschiedlichen Winkeln der Berührungstangente, also unterschiedlichen Radaufstandswinkeln $\alpha$, die Krümmungsdifferenz $\Delta x$ (in der Maßeinheit 1/cm) stets gleich groß sein.

Soll sichergestellt sein, daß die Flächenpressung $\sigma_F$ stets gleich, also unabhängig von dem tatsächlichen Radaufstandswinkel ist, muß die Krümmungsdifferenz mit zunehmendem Winkel geringer werden. Dies soll durch die gestrichelte Linie (22) in Fig. 1 verdeutlicht werden.

In Fig. 4 ist ein der erfindungsgemäßen Lehre gehorchender Schienenkopf (28) rein prinzipiell dargestellt, bei dem eine sich stetig ändernde Krümmung gegeben ist.

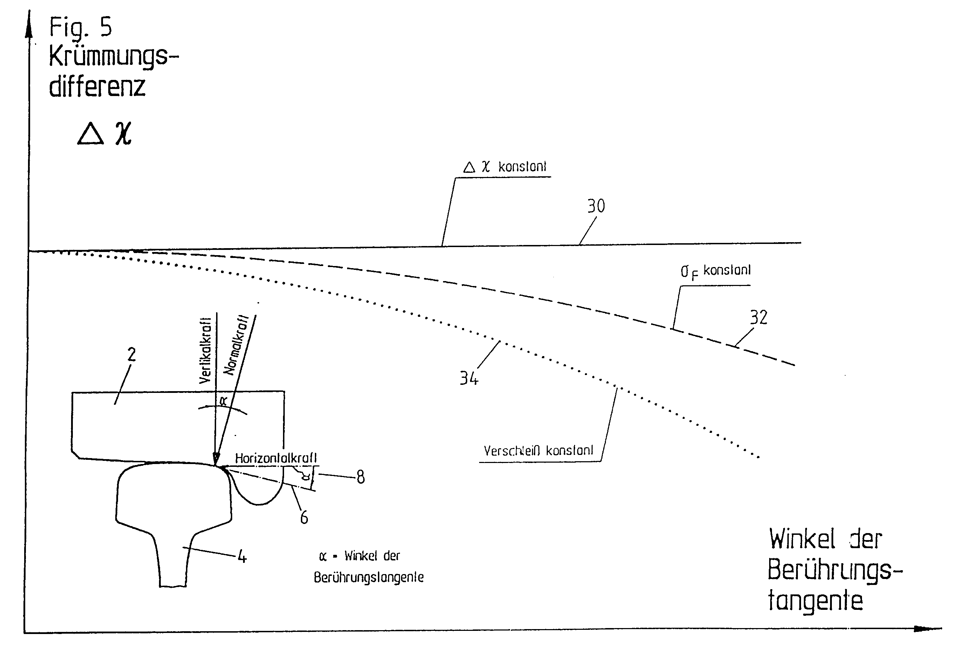

In Fig. 5 ist schließlich die Krümmungsdifferenz $\Delta x$ gegenüber dem Winkel $\alpha$, also dem Winkel zwischen der Berührungstangente (6) und der Horizontalen (8) aufgetragen. Die parallel zur Abszisse verlaufende durchgezogene Linie (30) entspricht einer konstanten Krümmungsdifferenz $\Delta x$ Soll die Flächenpressung $\sigma_F$ konstant sein, so muß die Krümmungsdifferenz $\Delta x$ mit zunehmendem Winkel $\alpha$ abnehmen. Die entsprechende Linie ist mit dem Bezugszeichen (32) versehen.

Soll schließlich der Verschleiß konstant bleiben, so muß mit zunehmendem Winkel $\alpha$ die Krümmungsdifferenz $\Delta x$ noch stärker abnehmen (Linie (34), Fig. 5), da die Flächenpressung $\sigma_F$ bei gleichzeitiger Zunahme der Gleitung reduziert werden soll.

Bei starker stetig abnehmender Krümmungsdifferenz ergibt sich folglich ein konstanter, eine Formtreue sichernder Verschleiß. Dies soll auch in Fig. 1 durch die punktierte Linie (24) verdeutlicht werden.

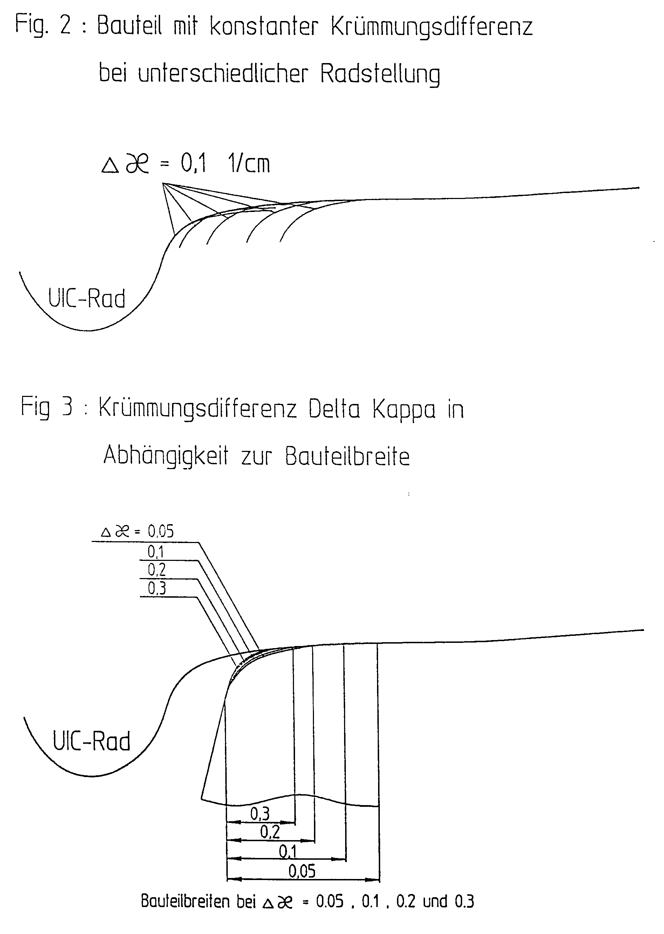

In den Fig. 2 und 3 sind verschiedene Schienenkonturen mit verschiedenen Krümmungsradienunterschieden wiedergegeben. In der Fig. 2 ist ein Weichenbauteil (Schiene, Zunge oder Herzstückspitze) in unterschiedlichen Stellungen zum Rad dargestellt, wobei der Krümmungsunterschied an allen Berührungspunkten gleich groß ist, d. h. $\Delta x$ = 0,1 1/cm.

Durch die Fig. 3 wird veranschaulicht, daß verschieden breite Bauteile auch unterschiedliche Krümmungsunterschiede erforderlich machen. Es ergibt sich hieraus auch die Folgerung, daß unterschiedliche Baubreiten unterschiedliche Werkstoffe erforderlich machen, um bei geringerer Baubreite einen unerwünschten Verschleiß zu vermeiden.

Die Krümmungsdifferenz $\Delta x$ liegt vorzugsweise zwischen 0,01 und 0,5, wobei der erstere Wert 0,01 für ein Gleis mit normalem vollem Schienenkopf und der Wert 0,5 für Schienenbauteile im Herzstück- und Zungenbereich gilt.

Die erfindungsgemäße Lehre ist vorzugsweise für Schienen in Form von Weichenbauteilen in besonders geeigneter Weise anzuwenden, um Lebensdauer- und Verschleißverhältnisse zu erreichen, die denen des Gleises entsprechen. Dies wird insbesondere dadurch erreicht, daß die Bauteilgeometrien derart geformt sind, daß bei jeder Radstellung die gleiche Belastung an einem Querschnitt auftritt, wobei die Materialeigenschaft derart beschaffen sein muß, daß keine bleibende Verformung beim Überrollen der Bauteile entsteht. Die Bauteilgeometrie ergibt sich dadurch, daß die Krümmungsdifferenzen der jeweiligen momentan aufeinanderliegenden Kontaktflächen von Rad und Bauteil gleich ist oder bei aufeinanderfolgenden Kontaktflächen eine stetige Änderung vorliegt, um insbesondere eine konstante Flächenpressung zu erreichen.

**Patentansprüche**

1.  Kontaktflächen eines Gleisbauteils wie Schiene oder Weichenbauteil und eines auf diesem fahrenden Rades eines Schienenfahrzeuges, wobei die Kontaktflächen des Rades Krümmungen aufweisen, die stetig ineinander übergehen,
    **dadurch gekennzeichnet,**
    daß die jeweilige Kontaktfläche des Gleisbauteils eine Krümmung besitzt, die zu der Krümmung der entsprechenden momentanen Kontaktfläche des sich abstützenden Rades eine konstante Differenz $\Delta x$ aufweist oder daß aufeinanderfolgende Kontaktflächen von dem Gleisbauteil und dem Rad eine sich stetig ändernde Krümmungsdifferenz $\Delta x$ aufweisen, betrachtet jeweils in einer Ebene senkrecht zur Schienenlängsachse.

2.  Kontaktflächen nach Anspruch 1,
    **dadurch gekennzeichnet,**
    daß die Krümmung der Kontaktfläche des Rades stets kleiner als die der entsprechenden momentanen Kontaktfläche des Gleisbauteils ist.

3. Kontaktflächen nach zumindest einem der vorhergehenden Ansprüche,
**dadurch gekennzeichnet,**
daß das Gleisbauteil eine Weichenzunge, eine bewegliche Herzstückspitze oder eine starre Herzstückspitze ist.

4. Kontaktflächen nach zumindest einem der vorhergehenden Ansprüche, wobei die jeweilige Kontaktfläche von Rad und Gleisbauteil eine Aufstandsellipse ist,
**dadurch gekennzeichnet,**
daß der jeweilige Gleisbauteilabschnitt derart geformt ist, daß die kurze, senkrecht zur Schienenlängsachse verlaufende Halbachse unabhängig von dem Aufstandswinkel gleich oder im wesentlichen gleich groß ist.

5. Kontaktfläche nach zumindest einem der vorhergehenden Ansprüche,
**dadurch gekennzeichnet,**
daß die Krümmungsdifferenz $\Delta x$ eine Funktion von dem Aufstandswinkel des Rades ist.

6. Kontaktflächen eines Gleisbauteils und eines auf diesem fahrenden Rades eines Schienenfahrzeuges, wobei die Kontaktflächen des Rades Krümmungen aufweisen, die stetig ineinander übergehen,
**dadurch gekennzeichnet,**
daß, betrachtet in einer Ebene senkrecht zur Schienenlängsachse, aufeinanderfolgende Kontaktflächen des Gleisbauteils Krümmungen besitzen, die zu den Krümmungen der entsprechenden momentanen Kontaktflächen des sich abstützenden Rades eine stetig sich ändernde Differenz $\Delta x$ derart aufweisen, daß die Schiene unabhängig von dem Radaufstandswinkel des Rades eine konstante oder nahezu konstante Flächenpressung erfährt.

7. Kontaktflächen nach Anspruch 6,
**dadurch gekennzeichnet,**
daß die Krümmungsdifferenz $\Delta x$ derart veränderbar ist, daß bei größer werdendem Aufstandswinkel die Flächenpressung bei gleichzeitiger Erhöhung der Gleitung reduzierbar ist.

8. Kontaktfläche nach zumindest einem der vorhergehenden Ansprüche,
**dadurch gekennzeichnet,**
daß die Krümmungsdifferenz $\Delta x$ zwischen 0,01 und 0,5 liegt.

**Claims**

1. Contact surfaces between a track part such as a rail or points part and a wheel of a railway vehicle travelling thereon, where the contact surface of the wheel have curvatures that continually merge into one another,
**wherein**
the respective contact surface of said track part has a curvature having a constant difference $\Delta x$ in relation to the curvature of the corresponding current contact surface of the wheel supported on it, or that successive contact surfaces of said rail and said wheel have a continually changing curvature difference $\Delta x$.

2. Contact surfaces according to Claim 1,
**wherein**
the curvature of the contact surface of said wheel is always smaller than the corresponding current contact surface of said track part.

3. Contact surfaces according to at least one of the previous claims,
**wherein**
said track part is a points tongue, a movable frog tip or a rigid frog tip.

4. Contact surfaces according to at least one of the previous claims, with the respective contact surface of said wheel and said track part being a contact ellipse,
**wherein**
the respective track part section is shaped such that the short half-axis running vertical to the rail longitudinal axis is the same size or substantially the same size regardless of the contact angle.

5. Contact surfaces according to at least one of the previous claims,
**wherein**
said curvature difference $\Delta x$ is a function of the contact angle of said wheel.

6. Contact surfaces between a track part and a wheel of a railway vehicle travelling thereon, with the contact surface of said wheel having curvatures that preferably continually merge into one another,
**wherein**
when viewed in a plane vertical to the logitudinal axis of a rail said successive contact surfaces of said track part have curvatures having in relation to the curvatures of the corresponding current contact surfaces of said wheel supported thereon a continually changing difference $\Delta x$, such that said rail is subjected to a constant or almost constant surface pressure regardless of the wheel contact angle of said wheel.

7. Contact surfaces according to Claim 6, **wherein**
said curvature difference Δ x is changeable such that the surface pressure is reducible with simultaneous increase of the sliding action as the contact angle becomes wider.

8. Contact surface according to at least one of the previous claims, **wherein**
said curvature difference Δ x is between 0.01 and 0.5.

**Revendications**

1. Surfaces de contact d'un élément de voie ferrée tel qu'un rail ou un élément d'aiguillage et d'une roue d'un véhicule ferroviaire roulant sur celui-ci, les surfaces de contact de la roue présentant des courbures qui s'enchaînent de manière continue,
caractérisées en ce que la surface de contact correspondante de l'élément de voie ferrée possède une courbure qui présente par rapport à la courbure de la surface de contact momentanée correspondante de la roue s'y appuyant une différence constante Δ x ou en ce que les surfaces de contact successives de l'élément de voie ferrée et de la roue, vues chaque fois dans un plan perpendiculaire à l'axe longitudinal du rail, présentent une différence de courbure Δ x changeant de manière continue.

2. Surfaces de contact suivant la revendication 1, caractérisées en ce que
la courbure de la surface de contact de la roue est toujours plus petite que celle de la surface de contact momentanée correspondante de l'élément de voie ferrée.

3. Surfaces de contact suivant l'une au moins des revendications précédentes
caractérisées en ce que
l'élément de voie ferrée est une lame d'aiguille, une lame de coeur mobile ou une lame de coeur fixe.

4. Surfaces de contact suivant l'une au moins des revendications précédentes, la surface de contact correspondante de la roue et de l'élément de voie ferrée étant une ellipse de contact, caractérisées en ce que
l'élément de voie ferrée correspondant a une telle forme que le petit demi-axe, perpendiculaire à l'axe longitudinal du rail, a la même grandeur ou pratiquement la même grandeur indépendamment de l'angle de contact.

5. Surface de contact suivant l'une au moins des revendications précédentes,
caractérisée en ce que
la différence de courbure Δ x est une fonction de l'angle de contact de la roue.

6. Surfaces de contact d'un élément de voie ferrée et d'une d'une roue d'un véhicule ferroviaire roulant sur celui-ci, les surfaces de contact de la roue présentant des courbures qui s'enchaînent de manière continue, caractérisées en ce que,
vues dans un plan perpendiculaire à l'axe longitudinal du rail, les surfaces de contact successives de l'élément de voie ferrée et de la roue roulant sur celui-ci présentent une différence de courbure Δ x changeant de manière continue telle que le rail subit une pression superficielle pratiquement constante ou pratiquement constante indépendamment de l'angle de contact de la roue.

7. Surfaces de contact suivant la revendication 6, caractérisées en ce que la différence de courbure Δ x varie de telle manière que lorsque l'angle de contact augmente, la pression superficielle peut diminuer en même temps qu'augmente le glissement.

8. Surface de contact suivant l'une au moins des revendications précédentes,
caractérisée en ce que
la différence de ocurbure Δ x est comprise entre 0,01 et 0,5.

**Krümmung**

Fig. 1

Vertikalkraft

Normalkraft

α = Winkel der Beruhrungstangente

2

Horizontalkraft

α

8

6

4

Krümmung Schiene Korbbogen
(Stand der Technik)

12    18

Δ Krümmung konstant

σ$_F$ konstant

20

Verschleiß konstant

24

22

16

Krummung Rad

10

14

**Winkel der Berührungs- tangente**

EP 0 529 271 B1

## Fig. 2 : Bauteil mit konstanter Krümmungsdifferenz bei unterschiedlicher Radstellung

$\triangle \varkappa = 0{,}1 \quad 1/cm$

UIC-Rad

## Fig 3 : Krümmungsdifferenz Delta Kappa in Abhängigkeit zur Bauteilbreite

$\triangle \varkappa = 0{,}05$
0,1
0,2
0,3

UIC-Rad

0,3
0,2
0,1
0,05

Bauteilbreiten bei $\triangle \varkappa = 0.05$ . 0.1 . 0.2 und 0.3

Fig. 4

Schienenkopfprofil mit drei Radien

Schienenkopfprofil mit stetiger Krümmungsänderung

Fig. 5
Krümmungsdifferenz

$\triangle \mathcal{X}$

$\triangle \mathcal{X}$ konstant

30

$\sigma_F$ konstant

32

34

Verschleiß konstant

Vertikalkraft
Normalkraft

2

$\alpha$

Horizontalkraft

8

6

4

$\alpha$ = Winkel der
Berührungstangente

Winkel der
Berührungstangente

EP 0 529 271 B1